# FASCICULE DE BREVET EUROPEEN

(11) **EP 0 742 114 B1**
(45) Date de publication et mention de la délivrance du brevet: **21.07.1999**
(21) Numéro de dépôt: 96107475.4
(22) Date de dépôt: 10.05.1996
(51) Int. Cl.: B60H 1/00

(54) **Dispositif de chauffage-ventilation de l'habitacle d'un véhicule automobile**
Heizungs- und Belüftungsvorrichtung für Innenräume von Fahrzeugen
Device for heating and/or ventilating the interior of a motor vehicle

(30) Priorité: 11.05.1995 FR 9505604
(43) Date de publication de la demande: 13.11.1996
(73) Titulaire: VALEO CLIMATISATION, 78320 Le Mesnil Saint-Denis (FR)
(72) Inventeur: Loup, Didier, 78310 Maurepas (FR)
(74) Mandataire: Gamonal, Didier

(56) Documents cités:
- DE-A- 4 022 932
- DE-A- 4 305 253
- DE-C- 3 826 182
- FR-A- 2 719 809

## Description

L'invention concerne un dispositif de chauffage-ventilation de l'habitacle d'un véhicule automobile.

Elle concerne plus particulièrement un tel dispositif de chauffage-ventilation, qui comprend un boîtier délimitant une entrée d'air frais et inne zone de mixage recevant de l'air mixé a température réglable à partir d'une branche de transmission d'air et d'une branche de réchauffage d'air, la zone de mixage étant en communication avec un conduit de dégivrage, avec un conduit d'aération et avec un conduit de chauffage, le dispositif comprenant en outre au moins un canal d'amenée d'air frais présentant inne ouverture d'entrée qui communique avec l'entrée d'air frais et une ouverture de sortie qui débouche dans inne chambre de sortie communiquant avec la zone de mixage, ladite chambre de sortie alimentant le conduit d'aération et les conduits de chauffage`

La Demande de brevet français No 94 05850 (FR-A-2 719 809), au nom de la Demanderesse, décrit un dispositif de chauffage-ventilation du type préciteé.

Dans ce dispositif antérieur, la branche de transmission d'air frais est interposée entre l'entrée d'air frais et la zone de mixage, la branche de réchauffage d'air est également interposée entre l'entrée d'air frais et la zone de mixage et elle contient en outre un échangeur de chaleur. Par ailleurs, il est prévu un volet de mixage monté à la jonction des deux branches précitées pour assurer la répartition d'un flux d'air entre ces deux branches et régler ainsi la température de l'air mixé qui arrive dans la zone de mixage et qui est ensuite dirigé vers les conduits précités.

Dans un tel dispositif, le conduit de dégivrage est propre à envoyer un flux d'air vers au moins une des vitres du véhicule, notamment le pare-brise, par l'intermédiaire d'au moins une buse.

Le conduit d'aération est propre à diriger un flux d'air vers la tête des passagers, et cela par l'intermédiaire d'aérateurs prévus sur la planche de bord.

Enfin, le conduit de chauffage est orienté vers le bas pour envoyer un flux d'air vers les pieds des passagers, et cela par l'intermédiaire d'au moins une buse débouchant vers le bas de l'habitacle.

Dans un tel dispositif, le conduit de dégivrage est habituellement contrôlé par un volet pivotant, tandis que le conduit d'aération et le conduit de dégivrage sont contrôlés, soit par deux volets respectifs, soit par un volet commun.

Ces volets peuvent prendre différentes positions pour assurer différents modes de distribution, et cela de manière en soi connue.

Le canal d'amenée d'air frais décrit dans la Demande de brevet français précitée a essentiellement pour fonction de prélever une fraction d'air frais à partir de l'entrée d'air frais et d'amener cette fraction d'air frais directement dans la chambre de sortie qui alimente le conduit d'aération et le conduit de chauffage. Ainsi, sauf dans le cas où le dispositif est dans la "position chaud", cette fraction d'air frais se mélange à l'air mixé provenant de la zone de mixage.

Il en résulte que, dans le mode de distribution "dégivrage-pieds", le conduit de chauffage (qui alimente les buses de distribution pieds) reçoit la fraction d'air précitée en mélange avec de l'air mixé, si bien que ce conduit de chauffage est alimenté en air à une température inférieure ou égale à celle de l'air alimentant le conduit de dégivrage, ce dernier recevant uniquement de l'air mixé.

Par ailleurs, dans le mode de distribution "aération-pieds", le canal d'admission d'air frais envoie le flux d'air frais de façon contrôlée dans le conduit d'aération, plutôt que dans le conduit de chauffage, ce qui permet de contrôler la température de l'air envoyé aux aérateurs.

L'invention a notamment pour but de perfectionner un tel dispositif.

Elle propose à cet effet un dispositif de chauffage-ventilation du type défini en introduction, dans lequel le canal d'amenée d'air frais est muni extérieurement de deux ailes latérales qui s'étendent sur au moins une partie de la longueur du canal, telle que comprise entre l'ouverture d'entrée et l'ouverture de sortie, et qui forment des déflecteurs pour favoriser l'envoi d'air chaud de la branche de réchauffage d'air vers le conduit de chauffage alimenté par la chambre de sortie.

Ainsi, les ailes latérales jouent le rôle de déflecteurs pour canaliser en partie le flux d'air chaud provenant de la branche de réchauffage d'air et le diriger vers le conduit de chauffage.

Ceci permet de favoriser une stratification de température en envoyant un air plus chaud vers le conduit de chauffage, donc vers les pieds des passagers, plutôt que vers le conduit d'aération, et donc vers les aérateurs placés sur la planche de bord.

L'invention s'applique tout particulièrement à un dispositif dans lequel le canal d'amenée d'air frais est délimité par une paroi inférieure située du côté de la branche de réchauffage d'air, une paroi supérieure opposée disposée du côté du conduit de dégivrage et deux parois latérales symétriques.

L'invention prévoit que les deux ailes latérales se rattachent perpendiculairement aux deux parois latérales du canal d'amenée d'air frais.

Avantageusement, les deux ailes sont planes et se situent sensiblement dans le même plan que la paroi inférieure du canal d'amenée d'air frais.

Dans une forme de réalisation préférée de l'invention, le canal d'amenée d'air frais est situé dans une région centrale du boîtier et les ailes latérales s'étendent seulement sur une partie de la largeur du boîtier.

Selon une autre caractéristique de l'invention, chacune des ailes a une forme générale trapézoïdale et est délimitée par un bord d'entrée situé au niveau de l'ouverture d'entrée du canal d'amenée d'air frais, par un bord de sortie situé au niveau de l'ouverture de sortie dudit canal, un bord intérieur rattaché au canal et un bord extérieur libre.

De préférence, le bord d'entrée a une longueur inférieure au bord de sortie, si bien que l'aile va en s'évasant.

Dans une autre variante, il est prévu que le bord d'entrée a une longueur supérieure au bord de sortie, si bien que la largeur de l'aile va en diminuant, depuis l'entrée vers la sortie.

Dans la description qui suit, faite seulement à titre d'exemple, on se réfère aux dessins annexés, sur lesquels :
- la figure 1 est une vue en coupe transversale d'un dispositif de chauffage-ventilation selon l'invention;
- la figure 2 est une vue de côté du canal d'amenée d'air frais du dispositif de la figure 1;
- la figure 3 est une vue en coupe, à échelle agrandie, selon la ligne III-III de la figure 2; et
- la figure 4 est une vue en coupe selon la ligne IV-IV de la figure 3.

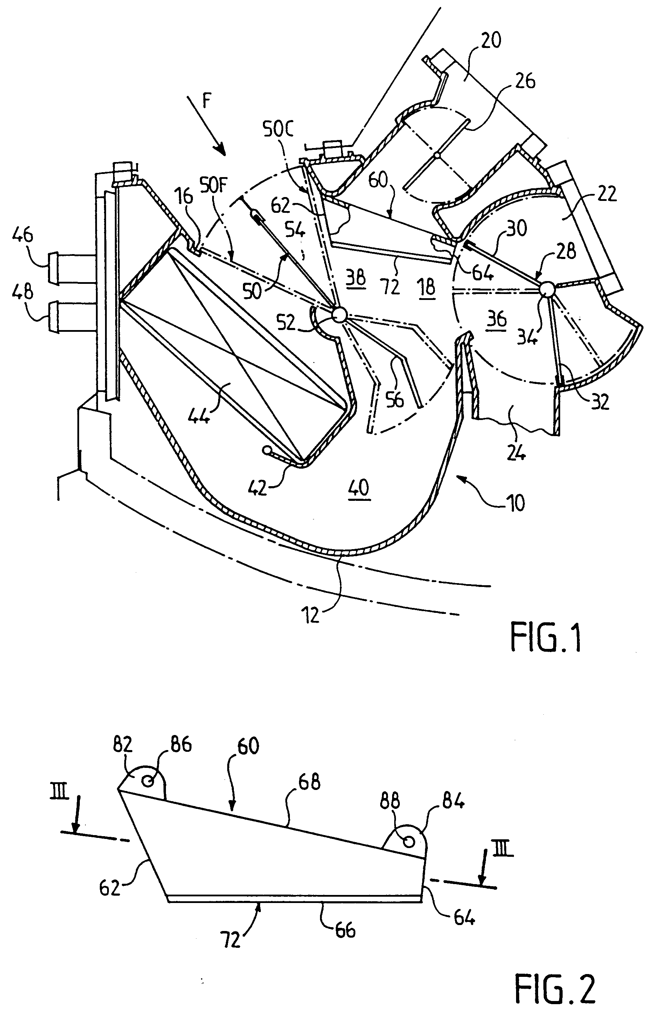

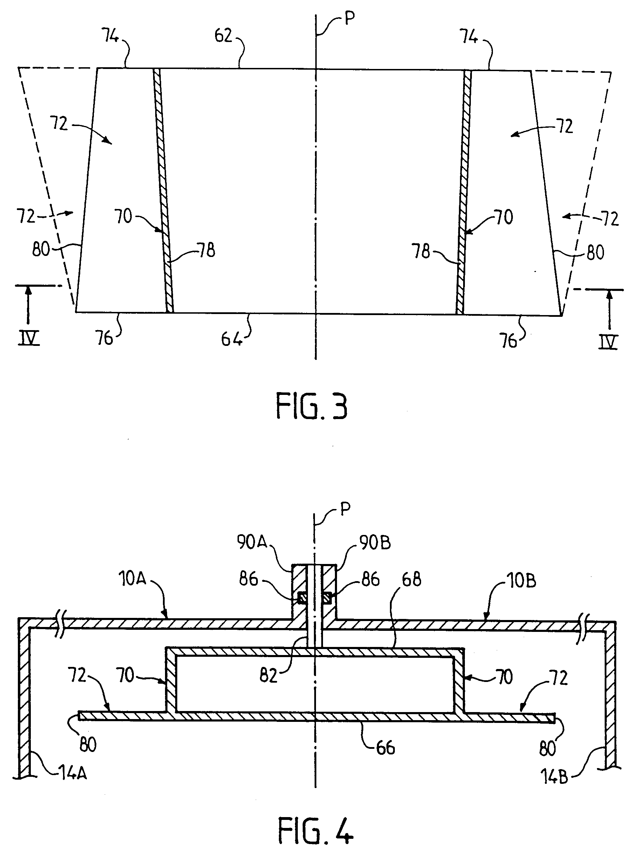

Le dispositif de chauffage pour véhicule automobile, représenté à la figure 1, comprend un boîtier 10 délimité principalement par une paroi 12 dont les génératrices sont parallèles entre elles et perpendiculaires au plan de la figure. Le boîtier 10 est formé de deux moitiés 10A et 10B généralement symétriques et réunies ensemble de part et d'autre d'un plan d'assemblage commun P (figure 4). Les moitiés 10A et 10B comprennent des parois latérales respectives 14A et 14B qui délimitent latéralement le boîtier.

Une entrée d'air 16 est délimitée dans le boîtier pour y amener un flux d'air frais pulsé (flèche F) provenant de l'extérieur de l'habitacle du véhicule ou recirculé à partir de l'habitacle, ce flux d'air étant éventuellement climatisé.

Le boîtier 10 délimite par ailleurs une chambre de mixage 18 qui est en communication avec un conduit de dégivrage 20, un conduit d'aération 22 et un conduit de chauffage 24.

Le conduit de dégivrage 20 est contrôlé par un volet pivotant 26 et est propre à envoyer de l'air frais ou réchauffé vers au moins une buse (non représentée) située à proximité d'une vitre du véhicule, notamment du pare-brise.

Le conduit d'aération 22 est propre à envoyer un flux d'air frais ou réchauffé vers au moins un aérateur (non représenté) situé notamment sur la planche de bord du véhicule. Habituellement, on prévoit deux aérateurs centraux et deux aérateurs latéraux.

Le conduit de chauffage 24 est propre à envoyer un flux d'air frais ou réchauffé vers au moins une buse (non représentée) située en partie inférieure de l'habitacle pour diriger cet air vers les pieds des passagers.

Les conduits 22 et 24 sont contrôlés par un volet de réglage commun 28 constitué de deux parties 30 et 32 reliées à un axe commun 34 en formant entre elles un angle d'environ 120°.

Le volet 38 est propre à se déplacer à l'intérieur d'une chambre 36 de forme générale cylindrique qui communique avec la zone de mixage 18 et qui est propre à alimenter les conduits 22 et 24.

Le dispositif 10 délimite en outre une branche de transmission d'air frais 38 interposée entre l'entrée d'air frais 16 et la zone de mixage 18, ainsi qu'une branche de réchauffage d'air 40 qui a sensiblement la forme d'un U et qui communique, d'une part avec l'entrée d'air 16, et d'autre part avec la zone de mixage 18.

La forme en U de la branche 40 est délimitée par une partie de la paroi 12 et par une paroi interne 42. Dans la chambre de réchauffage d'air 40 est logé un échangeur de chaleur 44 muni de deux tubulures 46 et 48 servant respectivement à l'admission et à l'évacuation d'un fluide chaud, avantageusement le fluide de refroidissement du moteur du véhicule.

A la jonction des deux branches 38 et 40 est prévu un volet de mixage 50 monté à pivotement autour d'un axe 52, ce volet étant formé de deux parties 54 et 56 situées de part et d'autre de l'axe 52.

Le volet 50 peut prendre une première position extrême 50C ou "position chaud" (représentée en trait interrompu) dans laquelle tout le flux d'air passe par la branche de réchauffage d'air 40 et donc dans l'échangeur de chaleur 44 en y étant réchauffé. Il peut prendre en outre une autre position extrême 50F ou "position froid" (représentée en trait interrompu) dans laquelle tout le flux d'air passe par la branche de transmission d'air frais 38 sans traverser l'échangeur de chaleur 44.

Le volet de mixage peut en outre prendre toute position intermédiaire entre les positions 50C et 50F pour répartir le flux d'air entre les deux branches et régler ainsi la température de l'air qui parvient à la zone de mixage 18 et qui est ensuite distribué entre les conduits 20, 22 et 24.

Sur la figure 1, le volet 50 est représenté dans une telle position intermédiaire. Le volet 26 est représenté en position d'ouverture ou "position dégivrage" tandis que le volet 28 est représenté dans une "position pieds" dans laquelle tout le flux d'air pénétrant dans la chambre 36 est évacué par le conduit 24 débouchant vers le bas de l'habitacle.

Dans la position de la figure 1, dite "position dégivrage-pieds", de l'air mixé est ainsi envoyé via le conduit de dégivrage 20 vers les différentes bouches de dégivrage-désembuage et, via le conduit 24, vers les buses situées vers les pieds des passagers.

Le dispositif de l'invention comprend en outre un canal d'amenée d'air frais 60 qui est logé dans une région centrale du boîtier 10 et qui présente une ouverture d'entrée 62 communiquant avec l'entrée d'air frais 16 et une ouverture de sortie 64 débouchant dans la chambre de sortie 36, laquelle alimente les conduits 22 et 24 (figure 1).

L'entrée 62 du canal 60 est située près de l'entrée 16, dans la zone d'évolution du volet de mixage 50, de manière à être fermée lorsque le volet de mixage est dans la position 50C. L'ouverture de sortie 64 débouche dans la chambre de mixage 36 sensiblement en vis-à-vis du conduit d'aération 22 pour privilégier l'envoi d'une fraction de flux d'air vers le conduit 22.

Lorsque le dispositif est dans la "position dégivrage-pieds", représentée à la figure 1, le conduit de dégivrage 20 reçoit de l'air mixé, tandis que le conduit de chauffage 24 reçoit de l'air mixé ainsi que la fraction d'air frais envoyée par le canal 60.

Il en résulte que le conduit 24 reçoit un air à température inférieure ou égale à celle que reçoit le conduit de dégivrage 20, ce qui permet de favoriser le dégivrage/désembuage des vitres du véhicule, notamment du pare-brise, par rapport au chauffage des pieds des passagers

Le dispositif peut prendre en outre notamment une "position aération-pieds" dans laquelle le volet est en position de fermeture (comme représenté en trait interrompu sur la figure 1) et le volet 28 dans une "position aération-pieds" (représentée en trait interrompu sur la figure 1), dans laquelle de l'air est envoyé simultanément vers le conduit d'aération 22 et vers le conduit de chauffage 24.

Dans cette position, la fraction d'air frais envoyée par le canal 60 est dirigée préférentiellement vers le conduit d'aération 22 plutôt que vers le conduit de chauffage 24, les conduits 22 et 24 recevant en outre de l'air mixé provenant de la zone de mixage 18.

Il en résulte un écart de température entre l'air envoyé aux aérateurs et l'air envoyé vers les pieds des passagers, l'air envoyé aux aérateurs étant à une température plus basse.

Le canal d'amenée d'air frais 60 (figures 2 à 4) est réalisé sous la forme d'un conduit de section transversale rectangulaire.

Le canal 60 est délimité par une paroi inférieure 66 située du côté de la branche de réchauffage d'air 40, et par une paroi supérieure 68 située du côté du conduit de dégivrage 20. Ces deux parois se rapprochent l'une de l'autre depuis l'ouverture d'entrée 60 jusqu'à l'ouverture de sortie 64. Le canal 60 est en outre délimité par deux parois latérales 70 (figures 3 et 4) qui se rapprochent l'une de l'autre depuis l'ouverture d'entrée 62 jusqu'à l'ouverture de sortie 64. Ainsi, la section rectangulaire du canal 60 diminue progressivement depuis l'ouverture d'entrée 62 jusqu'à l'ouverture de sortie 64.

Le canal d'amenée d'air frais 60 est muni extérieurement de deux ailes latérales 72 (figures 1 à 4) qui s'étendent sur toute la longueur du canal, telle que comprise entre l'ouverture d'entrée 62 et l'ouverture de sortie 64. Les deux ailes 72 se rattachent perpendiculairement aux deux parois latérales 70 du canal 60 et elles se situent sensiblement dans le même plan que la paroi inférieure 66 du canal 60.

Dans l'exemple, les ailes 72 sont planes et symétriques par rapport au plan P. Elles ont une forme générale trapézoïdale en étant délimitées par un bord d'entrée 74 situé au niveau de l'ouverture d'entrée 62, un bord de sortie 76 situé au niveau de l'ouverture de sortie 64, un bord intérieur 78 rattaché à une paroi latérale 70 du canal 60 et un bord extérieur libre 80 (figure 3).

Dans l'exemple, les bords d'entrée 74 sont rectilignes et dans le prolongement l'un de l'autre, et les bords de sortie 70 sont rectilignes et dans le prolongement l'un de l'autre.

Comme montré à la figure 3, le bord d'entrée 74 a une longueur inférieure au bord de sortie 76, si bien que l'aile 72 va en s'évasant depuis l'entrée vers la sortie. En variante, comme montré en trait interrompu sur la figure 3, l'aile 72 pourrait avoir une forme trapézoïdale dont la largeur diminuerait de l'entrée vers la sortie. En pareil cas, le bord d'entrée 74 doit avoir une longueur supérieure au bord de sortie 76.

Sur la paroi supérieure 68 du canal 60 sont formées deux pattes 82 et 84 (figures 2 et 4) qui permettent la fixation du canal à l'intérieur du boîtier. Le canal 60 est avantageusement réalisé par moulage en matière plastique et est ensuite rapporté dans le boîtier. Les pattes 82 et 84 comprennent des pions respectifs 86 et 88 et elles sont maintenues entre deux rebords respectifs 90A et 90B des moitiés de boîtier 10A et 10B (figure 4).

Comme on le voit sur la figure 4, les ailes 72 s'étendent seulement sur une partie de la largeur du boîtier, leurs bords extérieurs respectifs 80 étant à distance des parois latérales 14A et 14B du boîtier 10.

Les ailes 72 favorisent l'envoi d'air chaud de la branche de réchauffage 40 vers le conduit de chauffage 24, via la chambre de sortie 36.

## Revendications

1. Dispositif de chauffage-ventilation de l'habitacle d'un véhicule automobile, comprenant un boîtier (10) délimitant une entrée d'air frais (16) et une zone de mixage (18) recevant de l'air mixé à température réglable à partir d'une branche de transmission d'air frais (38) et d'une branche de réchauffage d'air (40), la zone de mixage (18) étant en communication avec un conduit de dégivrage (20), avec un conduit d'aération (22) et avec un conduit de chauffage (24), le dispositif comprenant au moins un canal d'amenée d'air frais (60) présentant une ouverture d'entrée (62) qui communique avec l'entrée d'air frais (16) et une ouverture de sortie (64) qui débouche dans une chambre de sortie (36) communiquant avec la zone de mixage (18), ladite chambre de sortie (36) alimentant le conduit d'aération (22) et le conduit de chauffage (24),
caractérisé en ce que le canal d'amenée d'air frais (60) est muni extérieurement de deux ailes latérales (72) qui s'étendent sur au moins une partie de la longueur du canal, telle que comprise entre l'ouverture d'entrée (62) et l'ouverture de sortie (64), et qui forment des déflecteurs pour favoriser l'envoi d'air chaud de la branche de réchauffage (40) vers le conduit de chauffage (24) alimenté par la chambre de sortie (36).

2. Dispositif selon la revendication 1, dans lequel le canal d'amenée d'air frais (60) est délimité par une paroi inférieure (66) située du côté de la branche de réchauffage d'air (40), une paroi supérieure opposée (68) disposée du côté du conduit de dégivrage (20) et deux parois latérales symétriques (70), caractérisé en ce que les deux ailes latérales (72) se rattachent perpendiculairement aux deux parois latérales (70) du canal d'amenée d'air frais (60).

3. Dispositif selon la revendication 2, caractérisé en ce que les deux ailes (72) sont planes et se situent sensiblement dans le même plan que la paroi inférieure (66) du canal d'amenée d'air frais (60).

4. Dispositif selon l'une des revendications 1 à 3, dans lequel le canal d'amenée d'air frais (60) est situé dans une région centrale du boîtier (10), caractérisé en ce que les ailes latérales (72) s'étendent seulement sur une partie de la largeur du boîtier (10).

5. Dispositif selon l'une des revendications 1 à 4, caractérisé en ce que chacune des ailes (72) a une forme générale trapézoïdale et est délimitée par un bord d'entrée (74) situé au niveau de l'ouverture d'entrée (62), un bord de sortie (76) situé au niveau de l'ouverture de sortie (64), un bord intérieur (78) rattaché au canal d'amenée d'air frais (60) et un bord extérieur libre (80).

6. Dispositif selon la revendication 5, caractérisé en ce que le bord d'entrée (74) a une longueur inférieure au bord de sortie (76).

7. Dispositif selon la revendication 5, caractérisé en ce que le bord d'entrée (74) a une longueur supérieure au bord de sortie (76).

## Claims

1. Heating and ventilating apparatus for the cabin of a motor vehicle, comprising a casing (10) defining a fresh air inlet (16) and a mixing zone (18) for receiving mixed air at an adjustable temperature from a fresh air transmission branch (38) and from an air heating branch (40), the mixing zone (18) being in communication with a deicing duct (20), with a ventilating air duct (22), and with a heating duct (24), the apparatus including at least one fresh air delivery duct (60) having an inlet port (62) which is in communication with the fresh air inlet (16), together with an outlet port (64) which is open into an outlet chamber (36) in communication with the mixing zone (18), the said outlet chamber (36) feeding the ventilating air duct (22) and the heating duct (24),
characterised in that the fresh air delivery duct (60) is provided with two external lateral vanes (72) which extend over at least part of the length of the duct, such as lies between the inlet port (62) and the outlet port (64), and which constitute deflectors for the preferential delivery of hot air from the heating branch (40) towards the heating duct (24) fed by the outlet chamber (36).

2. Apparatus according to Claim 1, wherein the fresh air delivery duct (60) is delimited by a lower wall (66) situated on the same side as the air heating branch (40), an opposite upper wall (68) disposed on the same side as the deicing duct (20), and two symmetrical side walls (70), characterised in that the two lateral vanes (72) are joined at right angles to the two side walls (70) of the fresh air delivery duct (60).

3. Apparatus according to Claim 2, characterised in that the two vanes (72) are flat and are situated in substantially the same plane as the lower wall (66) of the fresh air delivery duct (60).

4. Apparatus according to one of Claims 1 to 3, in which the fresh air delivery duct (60) is situated in the central region of the casing (10), characterised in that the lateral vanes (72) extend over only part of the width of the casing (10).

5. Apparatus according to one of Claims 1 to 4, characterised in that each of the vanes (72) has a generally trapezoidal form and is delimited by an inlet edge (74) situated at the level of the inlet port (62), an outlet edge (76) situated at the level of the outlet port (64), an internal edge (78) joined to the fresh air delivery duct (60), and a free external edge (80).

6. Apparatus according to Claim 5, characterised in that the inlet edge (74) is shorter in length than the outlet edge (76).

7. Apparatus according to Claim 5, characterised in that the inlet edge (74) is longer than the outlet edge (76).

## Patentansprüche

1. Heizungs- und Belüftungsvorrichtung für den Innenraum eines Kraftfahrzeugs, umfassend ein Gehäuse (10), das einen Frischlufteinlaß (16) und einen Mischbereich (18) begrenzt, der Mischluft mit regelbarer Temperatur aus einem Luftübertragungsstrang (38) und aus einem Lufterwärmungsstrang (40) erhält, wobei der Mischbereich (18) mit einer Entfrostungsleitung (20), mit einer Belüftungsleitung (22) und mit einer Heizungsleitung (24) in Verbindung steht, wobei die Vorrichtung außerdem wenigstens einen Frischluftzufuhrkanal (60) umfaßt, der eine Einlaßöffnung (62), die mit dem Frischlufteinlaß (16) in Verbindung steht, und eine Auslaßöffnung (64) aufweist, die in eine Auslaßkammer (36) mündet, die mit dem Mischbereich (18) in Verbindung steht, wobei die besagte Auslaßkammer (36) der Belüftungsleitung (22) und der Heizungsleitung (24) Luft zuführt,
**dadurch gekennzeichnet,** daß der Frischluftzufuhrkanal (60) außen mit zwei seitlichen Flügeln (72) versehen ist, die sich wenigstens auf einem Teil der Länge des Kanals erstrecken, die zwischen der Einlaßöffnung (62) und der Auslaßöffnung (64) enthalten ist, und die Abweiser bilden, um die Zuleitung von Warmluft vom Lufterwärmungsstrang (40) zu der durch die Auslaßkammer (36) gespeisten Heizungsleitung (36) zu begünstigen.

2. Vorrichtung nach Anspruch 1, bei der der Frischluftzufuhrkanal (60) durch eine auf der Seite des Lufterwärmungsstrangs (40) angeordnete untere Wand (66), durch eine auf der Seite der Entfrostungsleitung (20) angeordnete gegenüberliegende obere Wand (68) und durch zwei symmetrische Seitenwände (70) begrenzt ist , **dadurch gekennzeichnet,** daß sich die beiden seitlichen Flügel (72) senkrecht an die beiden Seitenwände (70) des Frischluftzufuhrkanals (60) anschließen.

3. Vorrichtung nach Anspruch 2, **dadurch gekennzeichnet,** daß die beiden Flügel (72) eben sind und sich in etwa in der gleichen Ebene wie die untere Wand (66) des Frischluftzufuhrkanals (60) befinden.

4. Vorrichtung nach einem der Ansprüche 1 bis 3, bei der sich der Frischluftzufuhrkanal (60) in einem mittleren Bereich des Gehäuses (10) befindet , **dadurch gekennzeichnet,** daß sich die seitlichen Flügel (72) nur auf einem Teil der Breite des Gehäuses (10) erstrecken.

5. Vorrichtung nach einem der Ansprüche 1 bis 4, **dadurch gekennzeichnet,** daß jeder der Flügel (72) eine allgemein trapezartige Form hat und durch eine in Höhe der Einlaßöffnung (62) angeordnete Eintrittskante (74), eine in Höhe der Auslaßöffnung (64) angeordnete Austrittskante (76), durch eine an den Frischluftzufuhrkanal (60) angeschlossene Innenkante (78) und durch eine freie Außenkante (80) begrenzt ist.

6. Vorrichtung nach Anspruch 5, **dadurch gekennzeichnet,** daß die Eintrittskante (74) eine kleinere Länge als die Austrittskante (76) hat.

7. Vorrichtung nach Anspruch 5, **dadurch gekennzeichnet,** daß die Eintrittskante (74) eine größere Länge als die Austrittskante (76) hat.
